# EUROPEAN PATENT SPECIFICATION

(11) **EP 3 993 089 B1**
(45) Date of publication and mention of the grant of the patent: **29.01.2025**
(21) Application number: 21827881.0
(22) Date of filing: 03.05.2021
(51) Int. Cl.: H01M 4/04, H01M 10/42, H01M 4/62, H01M 50/531, B05C 5/02, H01M 4/139, B05C 9/06

(54) **METHOD FOR MANUFACTURING ELECTRODE ON WHICH RESISTANCE LAYER IS FORMED**
VERFAHREN ZUR HERSTELLUNG EINER ELEKTRODE MIT DARAUF GEBILDETER WIDERSTANDSSCHICHT
PROCÉDÉ DE FABRICATION D'ÉLECTRODE SUR LAQUELLE UNE COUCHE DE RÉSISTANCE EST FORMÉE

(30) Priority: 25.06.2020 KR 20200077562
(43) Date of publication of application: 04.05.2022
(73) Proprietor: LG Energy Solution, Ltd., Seoul 07335 (KR)
(72) Inventor: LEE, Han Young, Daejeon 34122 (KR); JUNG, Bum Young, Daejeon 34122 (KR); YUN, Su Hyun, Daejeon 34122 (KR); YOON, Dong Sik, Daejeon 34122 (KR); LEE, Suk Woo, Daejeon 34122 (KR)
(74) Representative: Plasseraud IP
(86) International application number: PCT/KR2021/005543
(87) International publication number: WO 2021/261754

(56) References cited:
- WO-A1-2018/048126
- CN-A- 106 159 179
- DE-T5- 112011 105 286
- KR-A- 20120 048 508
- KR-A- 20130 121 383
- KR-A- 20140 009 037
- KR-A- 20150 037 399
- KR-A- 20190 023 538
- KR-B1- 101 751 002
- US-A1- 2020 136 133

## Description

### [Technical Field]

This application claims the benefit of priority based on Korean Patent Application No. 10-2020-0077562, filed on June 25, 2020.

The present invention relates to a manufacturing method of an electrode comprising a resistance layer, and more particularly, to a manufacturing method of an electrode in which resistance layers are formed at opposite ends of an electrode active material layer.

### [Background Art]

Recently, chargeable and dischargeable secondary batteries are widely used as an energy source of wireless mobile devices. In addition, secondary batteries are gaining attention as an energy source of electric vehicle, hybrid electric vehicle, and more, which are suggested as alternatives of the current gasoline vehicles and diesel vehicles using fossil fuels to alleviate air pollution, etc. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified into cylindrical batteries and prismatic batteries in which an electrode assembly is embedded in a cylindrical or rectangular metal can, depending on the shape of a battery case, and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed therebetween.

Among them, due to the high capacity of the battery, larger cases and processing of thin materials have attracted attention and accordingly, the usage of a pouch-type battery in which a stacked or stacked/folded electrode assembly is embedded in a pouch-shaped battery case of an aluminum laminate sheet is gradually increasing due to low production cost, small weight, and easy shape modification.

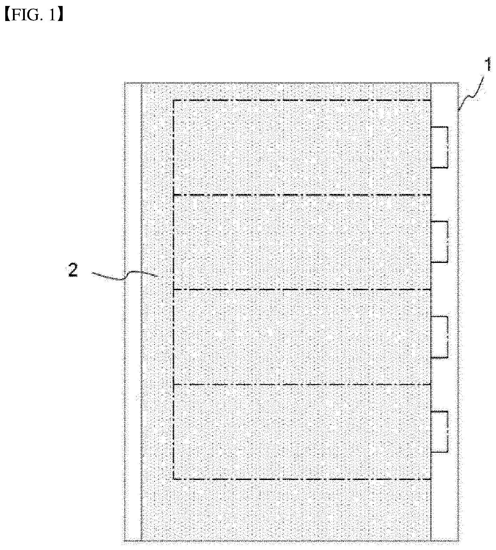

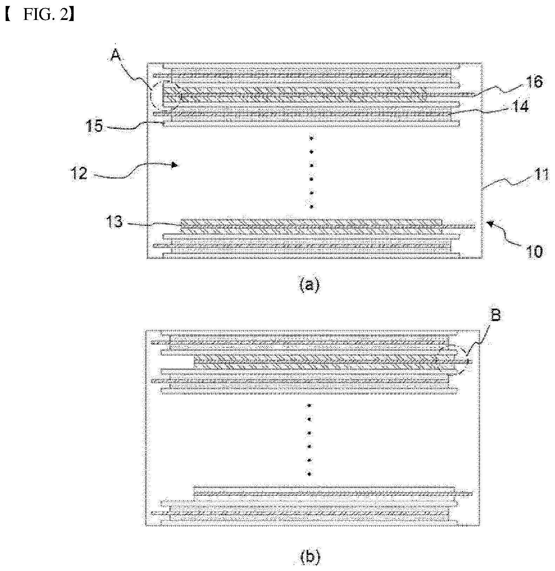

Fig. 1 is a schematic diagram of a conventional electrode manufacturing process and Fig. 2 is a cross section illustrating a structure of a battery, in which an overhang is generated.

Referring to Fig. 1, an electrode slurry including an electrode active material was applied to a current collector (1) to form an electrode active material layer (2), then dried, rolled, and notched to prepare an electrode. In the case of a positive electrode, a positive electrode slurry including positive electrode active material is applied on the positive electrode current collector. In the case of a negative electrode, a negative electrode slurry including negative electrode active material is applied on the negative electrode current collector.

The positive electrode (13) and negative electrode (14) thus prepared are alternatively stacked with a separator (15), manufactured into an electrode assembly (12), and built in an electrode case to prepare a battery (10). In this case, when manufacturing an electrode assembly, an array of the positive or negative electrode may move out of the position and an overhang in which an end of the positive electrode is protruding from an end of the negative electrode may be generated. Specifically, referring to Fig. 2, an opposite surface of a surface on which the positive electrode tab (16) is formed such as (a) may be overhanged (A), and/or a portion adjacent to the positive electrode tab (16) such as (b) may be overhanged (B). When the overhang phenomenon occurs, there are problems such as the positive electrode and negative electrode contacting directly or a short circuit forming as a result of a lithium precipitate cumulated from the negative electrode contacting directly with the positive electrode after charging and discharging.

Therefore, technology development is needed to resolve the problem.

KR 2012-0048508 A discloses an electrode for an electricity-storing device.

US 2020/136133 A1 discloses a strip-shaped electrode sheet.

### [Disclosure]

### [Technical Problem]

The present invention aims to provide a manufacturing method of an electrode, wherein battery safety can be improved by preventing a short circuit forming between a positive electrode and negative electrode even when an overhang occurs during manufacture of an electrode assembly.

In addition, the present invention aims to provide a manufacturing method of an electrode with improved productivity.

### [Technical Solution]

According to the present invention, a manufacturing method for electrode is provided as defined in the appended set of claims, the method comprises: a step of forming an electrode active material layer and resistance layer, by applying a resistance layer composition including inorganic additives and an electrode slurry, including an electrode active material on a current collector; a step of drying of the current collector in which the electrode active material layer and resistance layer are formed; and a step of forming the electrode in which an electrode tab is formed at one end by notching the dried current collector, and the step of forming the electrode active material layer and resistance layer is performed by one slot die in which two discharge ports are formed.

The resistance layer composition includes 60 to 90wt% of inorganic additives and 10 to 40wt% of binder.

In the step of forming the electrode active material layer and resistance layer, the resistance layer is formed in two columns adjacent to opposite ends of the electrode active material layer based on width direction of the current collector.

The manufacturing method of the electrode according to one embodiment of the present invention, thickness of the resistance layer is the same as the thickness of the electrode active material layer.

In one example, the width direction length of one of the resistance layers formed adjacent to opposite ends of the electrode active material layer is shorter than the width direction length of another one.

The width direction length of the resistance layer with the shorter width direction length among the resistance layers is 1 to 20% of the width direction length of the electrode active material layer.

In a specific example, non-coated parts are formed on the exterior of the resistance layer based on the width direction of the current collector, and the electrode tab is formed at one of the non-coated parts.

In a specific example, the electrode tab is formed at the non-coated part adjacent to the resistance layer with shorter width direction length among resistance layers.

In addition, in the step of forming the electrode, the current collector is notched in a way that the resistance layer with longer width direction length among resistance layers has the same width direction length with another one.

In another example, the width direction length of one of the resistance layers formed adjacent to opposite ends of the electrode active material layer is the same with the width direction length of another one.

In a specific example, the width direction length of one of the resistance layers is 1 to 20% of the width direction length of the electrode active material layer.

In this case, non-coated parts are formed on the exterior of the resistance layer based on the width direction of the current collector and the electrode tab is formed at one of the non-coated parts.

According to the manufacturing method of the electrode of the present invention, the slot die has a structure in which a first block, a second block, and a third block are consecutively fastened, and a first discharge port is formed at an interface between the first block and the second block through which the electrode slurry is discharged, and a second discharge port is formed at an interface between the second block and the third block through which the resistance layer composition is discharged.

In addition, the present invention provides the manufacturing method of the secondary battery including aforementioned manufacturing method of the electrode.

In addition, the present invention provides the electrode, which can be manufactured by the manufacturing method as described above.

Specifically, the electrode has a structure in which: an electrode active material layer is formed on a current collector in which electrode tabs are formed at one end, resistance layers are formed at opposite ends of the electrode active material layer, and the resistance layers include inorganic additives and binder. The detailed description of the resistance layer is same as the above resistance layer.

### [Advantageous Effects]

The present invention can improve battery safety by preventing a short circuit forming between a positive electrode and negative electrode even when an overhang occurs during manufacture of an electrode assembly.

In addition, the manufacturing method of the electrode according to the present invention can improve productivity by performing the application of the electrode slurry and the resistance layer composition with one slot die, in which two discharge ports are formed.

### [Brief Description of the Drawings]

Fig. 1 is a schematic diagram illustrating a conventional electrode manufacturing process.
Fig. 2 is a cross section illustrating a structure of a battery, in which an overhang is generated.
Fig. 3 is a flow chart illustrating steps of the manufacturing method of the electrode according to the present invention.
Fig. 4 is a schematic diagram of the shape of the application of electrode slurry and resistance layer composition on the current collector in the manufacturing method of the electrode according to an embodiment of the present invention.
Fig. 5 is a schematic diagram showing a notching process of the current collector, in which the electrode slurry and resistance layer composition are applied in the manufacturing method of the electrode according to an embodiment of the present invention.
Fig. 6 is a schematic diagram illustrating a shape of the application of electrode slurry and resistance layer composition on the current collector in the manufacturing method of the electrode according to the other embodiment of the present invention.
Fig. 7 is a schematic diagram showing a notching process of the current collector, in which the electrode slurry and resistance layer composition are applied in the manufacturing method of the electrode according to the other embodiment of the present invention.
Fig. 8 is a schematic diagram illustrating an application process of the electrode slurry and the resistance layer composition on the current collector in the manufacturing method of the electrode according to the present invention.
Fig. 9 is a schematic diagram illustrating a structure of a slot die used in the manufacturing method of the electrode according to an embodiment of the present invention.
Fig. 10 is a schematic diagram illustrating a shape of a shim member embedded in slot die used in the manufacturing method of the electrode according to an embodiment of the present invention.
Fig. 11 is a schematic diagram illustrating a structure of slot die used in the manufacturing method of the electrode according to the other embodiment of the present invention.
Fig. 12 is a schematic diagram illustrating a shape of a shim member embedded in slot die used in the manufacturing method of the electrode according to the other embodiment of the present invention.
Fig. 13 is a cross section showing a structure of an electrode manufactured by the manufacturing method of the electrode according to the present invention.

### [Detailed Description of the Preferred Embodiments]

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail.

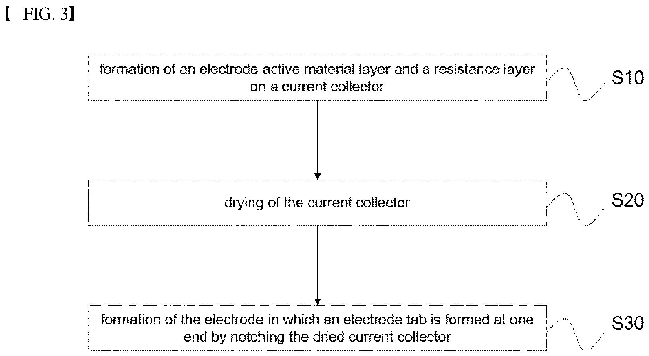

Fig. 3 is a flow chart illustrating steps of the manufacturing method of the electrode according to the present invention.

Referring to Fig. 3, a manufacturing method for an electrode according to the present invention comprises a step of forming an electrode active material layer and resistance layer, by applying a resistance layer composition including inorganic additives and an electrode slurry, including an electrode active material on a current collector (S 10); a step of drying of the current collector in which the electrode active material layer and resistance layer are formed (S20); and a step of forming the electrode in which an electrode tab is formed at one end by notching the dried current collector (S30), and the step of forming the electrode active material layer and resistance layer is performed by one slot die in which two discharge ports are formed.

As described above, in the conventional electrode manufacturing method, an electrode active material layer is formed by applying an electrode slurry on a current collector. During manufacture of an electrode assembly, when an array of the positive or negative electrode may move out of the position and an overhang in which an end of the positive electrode is protruding from an end of the negative electrode occurs, there are problems such as the positive electrode and negative electrode contacting directly or a short circuit forming as a result of a lithium precipitate cumulated from the negative electrode contacting directly with the positive electrode after charging and discharging.

In the manufacturing method of the electrode according to the present invention, battery safety is guaranteed by forming a resistance layer adjacent to the opposite ends of the electrode active material layer to prevent the protruding part of the positive electrode electrically connecting with the negative electrode even when an overhang occurs. Accordingly, incidence of defective products caused by short circuit in the battery is decreased and product yield is improved.

In addition, the electrode slurry and resistance layer composition are applied to the current collector by one slot die to decrease the volume and the number of equipment used in the process and shorten the process time.

Hereinafter, the present invention will be described in detail.

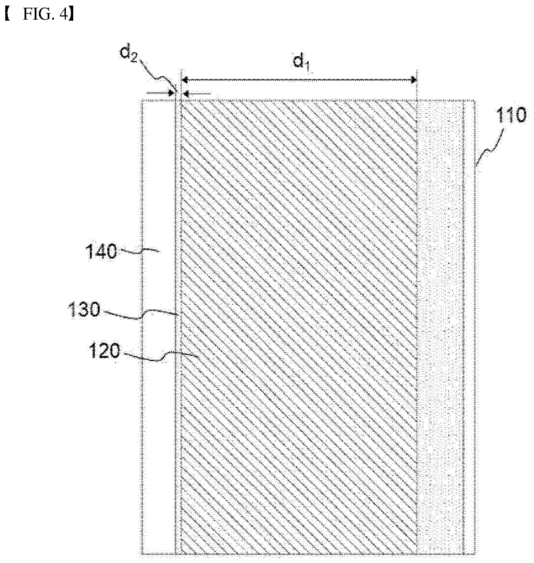

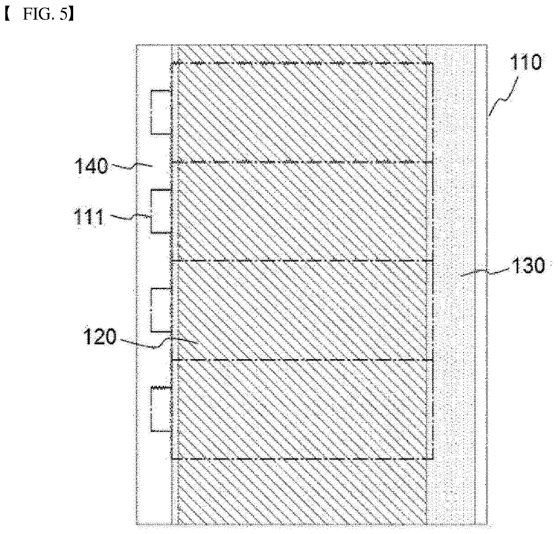

Fig. 4 is a schematic diagram of the shape of the application of electrode slurry and resistance layer composition on the current collector in the manufacturing method of the electrode according to an embodiment of the present invention. Fig. 5 is a schematic diagram showing a notching process of the current collector, in which the electrode slurry and resistance layer composition are applied according to the manufacturing method of the electrode according to an embodiment of the present invention.

Referring to Fig. 4, according to the manufacturing method of the electrode of the present invention, the electrode active material layer (120) and the resistance layer (130) are formed by application of the electrode slurry including the electrode active material and the resistance layer composition comprising inorganic additives on the current collector (110).

In the specification of the present invention, the electrode active material layer means the layer formed by application of the electrode slurry including the electrode active material on the current collector. In addition, the resistance layer means the layer formed by application of the resistance layer composition on the current collector.

According to the electrode of the present invention, the current collector can be formed of a conductive member made of a metal having good conductivity. The current collector is not particularly limited as long as it has conductivity without causing chemical change in the battery. When the electrode for a lithium secondary battery is a positive electrode, the electrode current collector is, for example, stainless steel, aluminum, nickel, titanium, sintered carbon or aluminum or stainless steel surface-treated with carbon, nickel, titanium or silver. In addition, fine unevenness can be formed on the surface of the collector to increase the adhesive force of the electrode coating layer. The current collector may be used in various forms such as a film, a sheet, a foil, a net, a porous body, a foam, and a nonwoven fabric, and may have a thickness of 3 to 500 µm.

When the electrode is a positive electrode, the examples include copper, stainless steel, aluminum, nickel, titanium, sintered carbon, or stainless steel surface-treated with carbon, nickel, titanium, silver or the like, aluminum-cadmium alloy, or the like. The current collector of the positive electrode may have a thickness of 3 to 500 µm.

On the other hand, the electrode active material layer may include an electrode active material, a conductive material, and a binder. The electrode active material may be a positive electrode active material or a negative electrode active material, and the positive electrode active material may be lithium-containing oxides, and maybe the same or different. As the lithium-containing oxide, a lithium-containing transition metal oxide may be used.

For example, the lithium-containing transition metal oxide is LixCoO₂ (0.5<x<1.3), Li ₓNiO₂ (0.5<x<1.3), Li ₓMnO ₂ (0.5<x<1.3), Li ₓMn₂O ₄ (0.5<x<1.3), Li ₓ (Ni ₐ Co _{b}Mn _{c} )O ₂ (0.5<x<1.3, 0<a<1, 0<b<1, 0<c<1, a +b+c=1), Li ₓ Ni _{1-y} Co _{y} O ₂ (0.5<x<1.3, 0<y<1), Li ₓ Co _{1-y} Mn _{y} O ₂ (0.5<x<1.3, 0 ≤y<1), Li ₓ Ni _{1-y} Mn _{y} O ₂ (0.5<x<1.3, 0≤y<1), Li ₓ (Ni ₐ Co _{b}Mn _{c} )O ₄ (0.5<x<1.3, 0 <a<2, 0<b<2, 0<c<2, a+b+c=2), Li ₓ Mn _{2-z} Ni _{z} O ₄ (0.5<x<1.3, 0<z<2), Li ₓ Mn _{2-z} Co _{z} O ₄ (0.5<x<1.3, 0<z<2), Li ₓ CoPO ₄ (0.5<x<1.3) and Li ₓ FePO ₄ (0.5<x<1.3). It may be any one selected from or a mixture of two or more of them, and the lithium-containing transition metal oxide may be coated with a metal or metal oxide such as aluminum (Al). Further, in addition to the lithium-containing transition metal oxide, one or more of sulfide, selenide, halide may be used.

The negative electrode may include a carbon material, lithium metal, silicon or tin. When a carbon material is used as the negative electrode active material, both low-crystalline carbon and high-crystalline carbon may be used. Typical low crystalline carbons include soft carbon and hard carbon, and high crystalline carbons include natural graphite, kish graphite, pyrolytic carbon, mesocarbon pitch-based carbon fiber, mesocarbon microbeads, mesophase pitches, and high-temperature calcined carbons such as petroleum orcoal tar pitch derived cokes.

The conductive material is usually added in an amount of 1 wt% to 30 wt% based on the total weight of the mixture including the positive electrode active material. Such a conductive material is not particularly limited as long as it has electrical conductivity without causing chemical changes in the battery, for example, graphite such as natural graphite or artificial graphite; Carbon black such as carbon black, acetylene black, ketjen black, channel black, furnace black, lamp black, and summer black; Conductive fibers such as carbon fiber and metal fiber; Metal powders such as carbon fluoride, aluminum, and nickel powder; Conductive whiskey such as zinc oxide and potassium titanate; Conductive metal oxides such as titanium oxide; Conductive materials such as polyphenylene derivatives and the like can be used.

The binder is a component that assists in bonding of the active material and the conductive material and bonding to the current collector, and is usually added in an amount of 1 to 30 wt% based on the total weight of the mixture containing the positive electrode active material.

The binder is a water-insoluble polymer which is soluble in an organic solvent and insoluble in water or an aqueous polymer which is insoluble in an organic solvent and soluble in water. Examples of the water-insoluble polymer include polyvinylidene fluoride (PVDF), polyvinylidene chloride (PVDC), polyacrylonitrile (PAN), polypropylene oxide (PPO), polyethylene oxide-propylene oxide copolymer (PEO-PPO), polytetrafluoroethylene (PTFE), polyimide (PI), polyetherimide (PEI), Stylenebutadiene rubber (SBR), polyacrylate, or one or more of them and/or derivatives thereof may be used.

Examples of aqueous polymer include carboxymethyl cellulose (CMC), methyl cellulose (MC), cellulose acetate cellulose (CAP), hydroxypropyl methyl cellulose (HPMC), hydroxypropyl methyl cellulose phthalate (HPMCP), or one or more of them and/or various cellulose derivatives such as the aforementioned.

The electrode active material, conductive material, binder, and the like are dispersed in a solvent such as N-methyl-pyrrolidone (NMP) to prepare the electrode slurry.

On the other hand, the resistance layer (130) may include inorganic additives and binder. The binder may use a binder that can be used in the electrode active material layer (120) as described above. The binder used in the resistance layer (130) can be the same kind or the different kind with the binder included in the electrode active material layer (120).

The examples of inorganic additives are alumina, silica, zirconia, titanium dioxide, magnesium oxide, calcium carbonate, or one or more of them may be used. Among them, considering the stability of the resistance layer, alumina may be used.

The resistance layer (130), based on the weight of the resistance layer, includes 60 to 90wt% of the inorganic additives, and may include particularly 70 to 80wt% of the inorganic additives. Accordingly, based on the weight of the resistance layer, the binder is included at 10 to 40wt%, and may be include more particularly at 20 to 30wt%. When the contents of the inorganic additives and binder are in the aforementioned range, the increase of the internal resistance of the resistance layer can be ensured while the resistance layer and the current collector can be stably bonded . When the inorganic additives content is lower than 60wt% and the binder content is above 40wt%,the bonding force of the resistance layer may be increased, but the internal resistance of the resistance layer may be reduced. On the other hand, when the inorganic additives content is above 90wt% and the binder content is lower than 10wt%, the resistance layer may be easily separated from the current collector due to reduction of the binder content.

The resistance layer composition can be manufactured by dispersing inorganic additives and binder in the solvent. As the solvent, by using a different one other than the solvent used in the electrode slurry, the mixture of the components of the resistance layer and the electrode active material layer can be prevented at the interface of the resistance layer and the electrode active material layer. For example, if NMP is used as a solvent of the electrode slurry, acetone may be used as a solvent of the resistance layer composition.

Specifically, referring to Fig. 4, in the step of forming the electrode active material layer (120) and resistance layer (130), the resistance layer can be formed in two columns adjacent to opposite ends of the electrode active material layer (120) based on the width direction of the current collector (110). The resistance layer (130) formed at this stage remains adjacent to the opposite ends of the electrode active material layer (120) even after the notching of the current collector (110).

The thickness of the resistance layer (130) may be the same with thickness of the electrode active material layer (120). In this case, the thickness means the average thickness of each layers. In a case of the thickness of the resistance layer being thicker than the thickness of the electrode active material layer, a step may form at the boundary between the resistance layer and the electrode active material layer. This case is not desirable because the separator and the electrode is difficult to closely contact between the separator and the electrode, and the volume of the electrode assembly may increase. In addition, in the case of the thickness of the resistance layer being thinner than the thickness of the electrode active material layer, the active material layer may be exposed from the resistance layer.

In one example, the width direction length of one of the resistance layers (130) formed adjacent to the opposite ends of the electrode active material layer may be shorter than the width direction length of another one. In the present invention, the width direction means the direction, to which an electrode tab described below is protruded perpendicular to a coating progress direction. In this case, the width direction length of the resistance layer with relatively shorter width direction length should preferably be the same with the width direction length of the resistance layer formed at the finally produced electrode. This is because the electrode tab should be formed adjacent to the resistance layer with shorter width direction length. On the other hand, the width direction length of the resistance layer formed with relatively longer width direction length is formed longer than the width direction length of the resistance layer formed at the finally produced electrode. The resistance layer formed with relatively longer width direction length is punched to the width direction length of the resistance layer to be formed at the finally produced electrode in the notching process. This is to prevent the expose of the part on the top surface of the current collector by directly punching the resistance layer formed on the current collector in the notching process.

Specifically, the width direction length (d2) of the resistance layer with shorter width direction length among said resistance layers may be 1 to 20% of the width direction length (d1) of the electrode active material layer. Particularly, the width direction length (d2) of the resistance layer with shorter width direction length may be 1 to 10% of the width direction length (d1) of the electrode active material layer, and more particularly 1 to 5% of d1. The width direction length of the resistance layer with shorter width direction length is the same with the width direction length of the resistance layer formed at the finally produced electrode as described above. If the width direction length (d2) is lower than the said range, the area of the resistance layer decreases. Thus, when an overhang occurs, the positive electrode active material layer may be exposed. In addition, if the width direction length (d2) is above the aforementioned range, the volume of the active material relatively decreases to lose the electrode capacity.

When the electrode active material layer (120) and resistance layer (130) are formed accordingly, non-coated parts (140) are formed on the exterior of the resistance layer (130) based on the width direction of the current collector and the electrode tab (111) is formed at one of the non-coated parts (140).

Among them, the electrode tab (111) may be formed adjacent to the resistance layer with shorter width direction length among resistance layers formed in two columns adjacent to opposite ends of the electrode active material layer (120). In this case, electrode tabs are not formed at the exterior of the resistance layer with longer width direction length. Thus, it is possible to not form the non-coated parts.

Among resistance layers, the resistance layer with longer width direction length may be punched to have a certain width direction length in the notching process. Specifically, in the step of forming the electrode, the current collector (110) may be notched. In this case, the width direction length of the resistance layer with longer width direction length may be the same with that of another one. However, as per the performance of the battery to be represented, the width direction lengths of the resistance layers may be different.

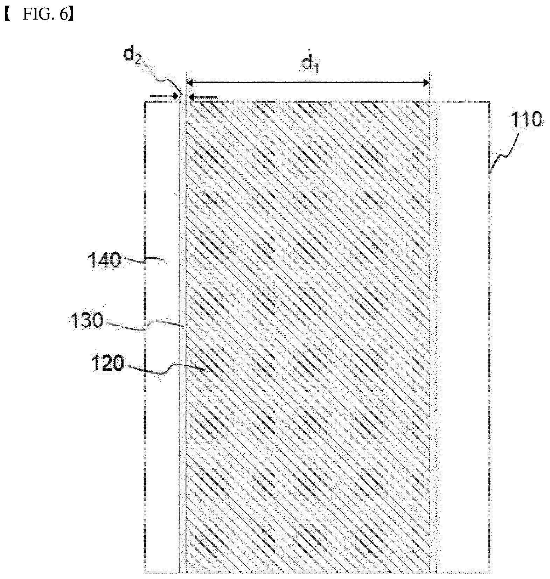

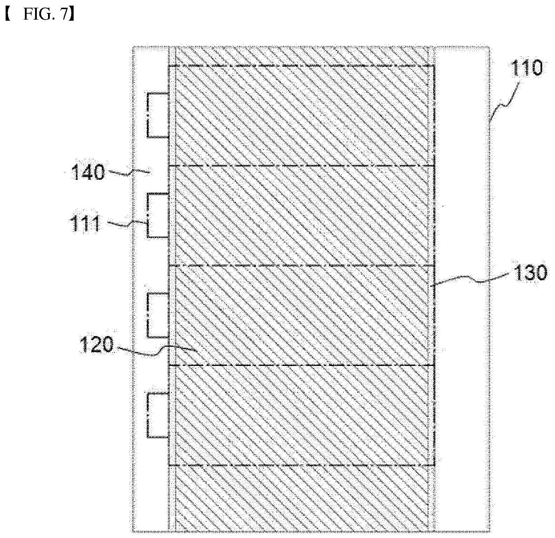

Fig. 6 is a schematic diagram illustrating a shape of the application of electrode slurry and resistance layer composition on the current collector in the manufacturing method of the electrode according to the other embodiment of the present invention. Fig. 7 is a schematic diagram showing a notching process of the current collector, in which the electrode slurry and resistance layer composition are applied in the manufacturing method of the electrode according to the other embodiment of the present invention.

In one example, the width direction length of one of the resistance layers (130) formed adjacent to opposite ends of the electrode active material layer (120) may be the same with the width direction length of another one. In this case, the width direction length of the resistance layer (130) is the same with the width direction length of the resistance layer formed at the finally produced electrode.

The width direction length (d2) of one of the resistance layers may be 1 to 20% of the width direction length (d1) of the electrode active material layer, and particularly, 1 to 10%, and more particularly, 1 to 5%.

In this case, non-coated parts (140) are formed on the exterior of the resistance layer (130) based on the width direction of the current collector and the electrode tab (111) is formed at one of the non-coated parts (140). In addition, it is possible to not form non-coated part where the electrode tabs are not formed.

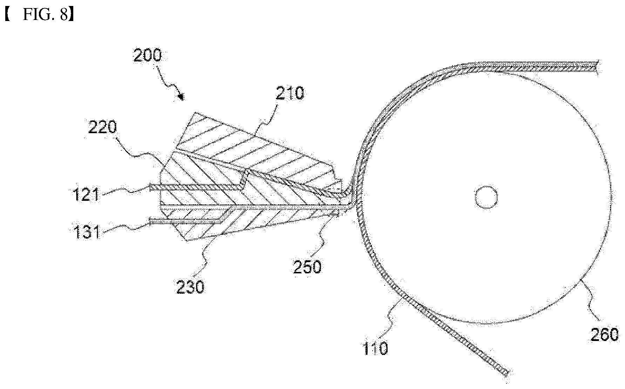

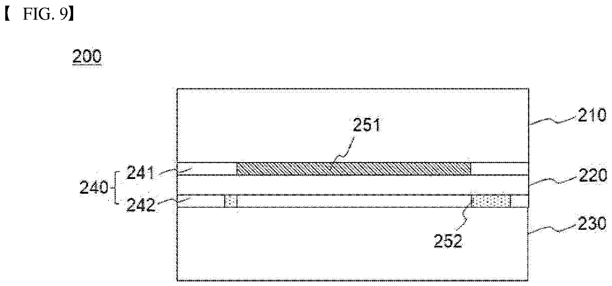

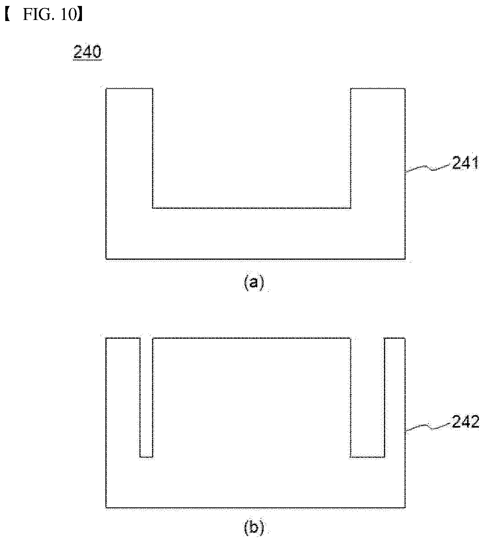

Fig. 8 is a schematic diagram illustrating an application process of the electrode slurry and the resistance layer composition on the current collector in the manufacturing method of the electrode according to the present invention. Fig. 9 is a schematic diagram illustrating a structure of a slot die used in the manufacturing method of the electrode according to an embodiment of the present invention. Fig. 10 is a schematic diagram illustrating a shape of a shim member embedded in slot die used in the manufacturing method of the electrode according to an embodiment o of the present invention.

Referring to Fig. 8 and Fig. 9, the step of forming the electrode active material layer and resistance layer is performed by one slot die (200), where two discharge ports are formed. As a result, the volume and the number of equipment used in the process and process time decrease. Thus, product yield is improved.

When two discharge ports are formed on the slot die, the shape of the slot die is not particularly limited. However, for example, the slot die (200) has a structure in which the first block (210), the second block (220), and the third block (230) are consecutively fastened. At the interface between the first block (210) and the second block (220), the first discharge port (251) can be formed to discharge the electrode slurry. At the interface between the second block (220) and the third block (230), the second discharge port (252) can be formed to discharge the resistance layer composition including the inorganic additives and binder.

In Fig. 8, the second discharge port (252), in which the resistance layer composition is discharged, is located at the upstream point of the first discharge port (251), in which the electrode slurry is discharged. Thus, the resistance layer composition is discharged relatively earlier than the electrode slurry. However, the first discharge port (251) can be located at the upstream point of the second discharge port (252). Thus, it is possible for the electrode slurry to discharge earlier than the resistance layer composition.

Referring to Fig. 8, the slot die (200) is located at one side of the current collector (110), and discharge the resistance layer composition (131) and the electrode slurry (121) through the discharge port (250). On the other side of the current collector (110) adjacent to the slot die (200) is a conveyor (260). The conveyor (260) transports the current collector (110) and supports the current collector (110), so that the current collector (110) can be coated with the electrode slurry and the resistance layer composition.

The electrode slurry and resistance layer composition are formed by mixing raw materials constituting them, and filtered to increase the dispersion degree via sieve or filter or etc., then transported to the slot die (200). The electrode slurry and resistance layer composition transported to the slot die (200) via slurry delivery tube (not shown) and manifold (not shown) where supplied slurry are temporarily stored are discharged at discharge port (250), then applied on the current collector (110). In this case, the resistance layer composition (131) is applied on the top surface of the current collector (110), while it is adjacent to opposite ends of the electrode slurry (121).

The current collector (110) is consecutively transported by the conveyor (260). The current collector of which the resistance layer (130) and the electrode active material layer (120) are formed is transported to a dryer (not shown), and rolled by passing through a roller (not shown), then go through the notching process to produce an electrode.

On the other hand, referring to Fig. 9 to 10, shim members (240) may be disposed between each dies to form the first discharge port (251) and the second discharge port (252). More specifically, the first shim member (241) may be disposed between the first block (210) and the second block (220) and the second shim member (242) may be disposed between the second block (220) and the third block (230).

The first shim member (241) includes a hollow in communication with the manifold on a plate in the same size with the interior of the first block (210) and the second block (220), and one side is opened to form an opening part where the electrode slurry can be discharged. The opening part acts as a discharge port when assembling the slot die.

The second shim member (242) includes a hollow in communication with the manifold on a plate in the same size with the interior of the second block (220) and the third block (230) and one side is opened to form an opening part where the resistance layer composition can be discharged. The opening part acts as a discharge port when assembling the slot die.

On the other hand, because said first shim member (241) and said second shim member (242) provided between the blocks form a discharge port (250), the shape of the first shim member (241) and the second shim member (242) should be adjusted as per the pattern to be applied.

Specifically, the hollow formed in the first shim member (241) has the same shape as the manifold to apply the electrode slurry at the center of the current collector. However, the hollow formed in the second shim member (242) has a wall at the center to apply the resistance layer composition to the opposite ends of the electrode slurry. In addition, since the resistance layer composition is applied in two columns with different width direction lengths on the current collector, the width direction length of one of the hollows separated by the walls in the second shim member (242) may be formed shorter than the width direction length of another one.

In addition, since the thickness of the shim member (240) determines the thickness of material to be applied, the thickness of the first shim member (241) may be the same with the thickness of the second shim member (242).

In addition, it's not shown in Fig. 9, but considering the resistance layer composition and the electrode slurry are planarized after application and extend over both sides, the first discharge port (251) and the second discharge port (252) can be separated a certain distance from each other based on the width direction.

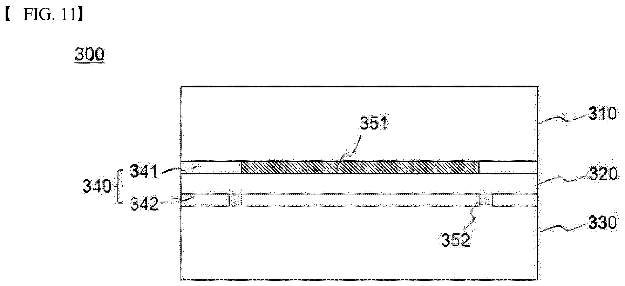

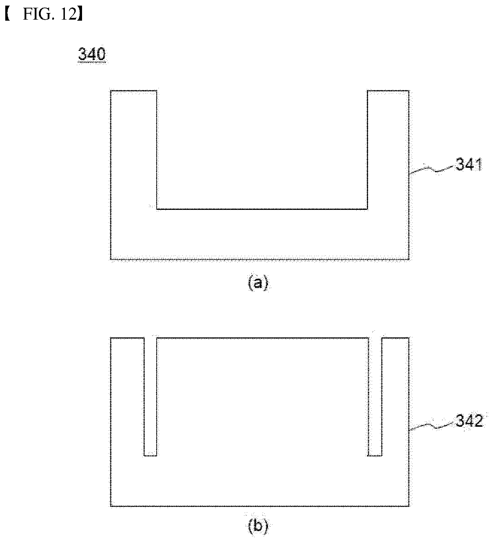

Fig. 11 is a schematic diagram illustrating a structure of slot die used in the manufacturing method of the electrode according to the other embodiment of the present invention. Fig. 12 is a schematic diagram illustrating a shape of a shim member embedded in slot die used in the manufacturing method of the electrode according to the other embodiment of the present invention.

Referring to Fig. 11 and 12, shim members (340) may be disposed between each dies to form the first discharge port (351) and the second discharge port (352). More specifically, the first shim member (341) may be disposed between the first block (310) and the second block (320) and the second shim member (342) may be disposed between the second block (320) and the third block (330).

The first shim member (341) includes a hollow in communication with the manifold on a plate in the same size with the interior of the first block (310) and the second block (320) and one side is opened to form an opening part where the electrode slurry can be discharged. The opening part acts as a discharge port when assembling the slot die.

The second shim member (342) includes a hollow in communication with the manifold on a plate in the same size with the interior of the second block (320) and the third block (330) and one side is opened to form an opening part where the resistance layer composition can be discharged. The opening part acts as a discharge port when assembling the slot die.

In additon, the hollow formed in the first shim member (341) has the same shape as the manifold to apply the electrode slurry at the center of the current collector. However, the hollow formed in the second shim member (342) has a wall at the center to apply the resistance layer composition to the opposite ends of the electrode slurry. In addition, since the resistance layer composition is applied in two columns with same width direction lengths on the current collector, the width direction length of one of the hollows separated by the walls in the second shim member (342) may be formed same as the width direction of another one.

In addition, the thickness of the first shim member (341) and the second shim member (342) can be the same.

In addition, it's not shown in Fig. 11, but considering the resistance layer composition and the electrode slurry are planarized after application and extend over both sides, the first discharge port (351) and the second discharge port (352) can be separated a certain distance from each other based on the width direction.

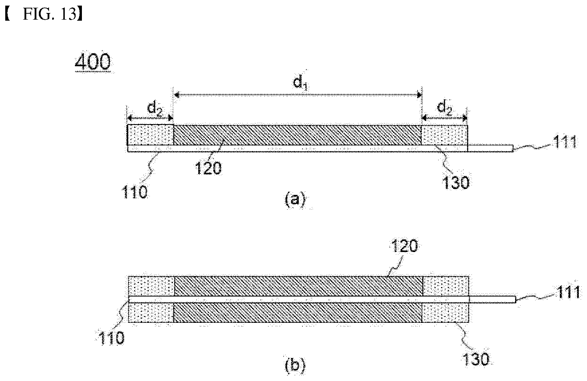

Fig. 13 is a cross section showing a structure of an electrode manufactured by the manufacturing method of the electrode according to the present invention.

Referring to Fig. 13, the electrode has a structure in which the electrode active material layer (120) is formed on the current collector in which the electrode tab (111) is formed at one end, and the resistance layer (130) is formed adjacent to opposite ends of the electrode active material layer (120).

In this case, the resistance layer (130) and the electrode active material layer (120) can be formed at one side or opposite sides of the current collector (110). Referring to Fig. 13, (a) of Fig. 13 shows an electrode, in which the resistance layer (130) and the electrode active material layer (120) are formed at one side of the current collector (110). (b) of Fig. 13 illustrates an electrode, in which the resistance layer (130) and the electrode active material layer (120) are formed at opposite sides of the current collector (110).

In this case, the width direction length of one of the resistance layers (130) may be 1 to 20% of the width direction length of the electrode active material layer (120), and particularly, 1 to 10%, and more particularly, 1 to 5%.

In addition, thickness of the resistance layers (130) may be the same with thickness of the electrode active material layer (120).

In addition, in Fig. 13, the interface between the electrode active material layer (120) and the resistance layer (130) is illustrated perpendicular to the current collector. Said interface may have a slope as per the discharge order of the electrode slurry and the resistance layer composition. For example, if the resistance layer composition is discharged earlier than the electrode slurry, one end of the electrode active material layer covers one end of the resistance layer as the resistance layer forms relatively earlier on the current collector. In this case, a slope may be formed in a shape of the resistance layer cutting into the bottom of the electrode active material layer. If the electrode slurry is discharged earlier than the resistance layer composition, a slope may be formed in a shape of the electrode active material layer cutting into the bottom of the resistance layer as the electrode active material layer forms relatively earlier on the current collector.

The present invention provides a manufacturing method of secondary battery including the aforementioned manufacturing method of the electrode.

The secondary battery is housing an electrode assembly in which a positive electrode, negative electrode, and a separator are alternatively stacked inside an electrode case. In this case, at least one of the positive electrode and the negative electrode can be manufactured to form resistance layer at opposite ends of the active material layer. In addition, the shape of the electrode assembly is not particularly limited as long as it includes the separator between the positive electrode and the negative electrode, the positive electrode, and the negative electrode, and may be, for example, a jelly-roll type, a stack type, or a stackfold type.

The battery case is not particularly limited as long as it is used as an exterior material for packaging the battery, and a cylindrical, square, or pouch type may be used. However, particularly, the battery cell can be a pouch type. In case of the pouch type battery cell, the battery case is made of an aluminum laminate sheet, provides a space for accommodating the electrode assembly, and has a pouch shape as a whole. The pouch type secondary battery is manufactured through a process in which the electrode assembly is embedded in the storage portion of the battery case, the electrolyte is injected, and then the outer circumferential surface of the battery case in which the upper pouch and the lower pouch of the battery case are in contact is heat-sealed. Other contents related to the pouch type secondary battery are well known to those skilled in the art and are not described in detail here.

The above description is merely illustrative of the technical idea of the present invention, and those skilled in the art to which the present invention pertains may make various modifications and variations without departing from the essential characteristics of the present invention. Therefore, the embodiments disclosed in the present invention are not intended to limit the technical idea of the present invention but to describe the present invention, and the scope of the technical idea of the present invention is not limited by these embodiments. The scope of protection of the present invention should be interpreted by the following claims, and all technical ideas within the scope equivalent thereto should be construed as being included in the scope of the present invention.

In the present specification, terms indicating upward, downward, leftward, rightward, forward, and backward directions are used, but these terms are for convenience of explanation only and may vary depending on the position of an object or the position of an observer It will be apparent to those skilled in the art that the present invention is not limited thereto.

### [Description of reference numerals]

1, 110: current collector
2, 120: electrode active material layer
111: electrode tab
121: electrode slurry
130: resistance layer
131: resistance layer composition
140: non-coated part
200, 300: slot die
210, 310: first block
220, 320: second block
230, 330: third block
240, 340: shim member
241, 341: first shim member
242, 342: second shim member
250: discharge port
251, 351: first discharge port

## Claims

1. A manufacturing method for an electrode comprising:
a step (S10) of forming an electrode active material layer (120) and a resistance layer (130), by applying a resistance layer composition (131) including inorganic additives and an electrode slurry (121), including an electrode active material on a current collector (110);
a step (S20) of drying the current collector (110) in which the electrode active material layer (120) and the resistance layer (130) are formed; and
a step (S30) of forming the electrode in which an electrode tab (111) is formed at one end by notching the dried current collector (110), and
in the step (S10) of forming the electrode active material layer (120) and the resistance layer (130) is performed by one slot die (200;300) in which two discharge ports (250) formed by two columns adjacent to opposite ends of the electrode active material layer (120) based on width direction of the current collector (110) are formed; and
wherein the resistance layer composition (131) includes 60 to 90wt% of inorganic additives and 10 to 40wt% of binder.

2. The manufacturing method for an electrode of claim 1, wherein thickness of the resistance layer (130) is the same as the thickness of the electrode active material layer (130).

3. The manufacturing method for an electrode of claim 1, wherein the width direction length of one of the resistance layers (130) formed adjacent to opposite ends of the electrode active material layer (120) is shorter than the width direction length of another one.

4. The manufacturing method for an electrode of claim 3, wherein the width direction length of the resistance layer (130) with the shorter width direction length among the resistance layers (130) is 1 to 20% of the width direction length of the electrode active material layer (130).

5. The manufacturing method for an electrode of claim 4, wherein non-coated parts (140) are formed on the exterior of the resistance layer (130) based on the width direction of the current collector (110), and the electrode tab (111) is formed at one of the non-coated parts (140).

6. The manufacturing method for an electrode of claim 5, wherein the electrode tab (111) is formed at the non-coated part (140) adjacent to the resistance layer (130) with shorter width direction length among resistance layers (130).

7. The manufacturing method for an electrode of claim 3, wherein in the step of forming the electrode, the current collector (111) is notched in a way that the resistance layer (130) with longer width direction length among resistance layers (130) has the same width direction length with another one.

8. The manufacturing method for an electrode of claim 1, wherein the width direction length of one of the resistance layers (130) formed adjacent to opposite ends of the electrode active material layer (120) is the same with the width direction length of another one.

9. The manufacturing method for an electrode of claim 8, wherein the width direction length of one of the resistance layers (130) is 1 to 20% of the width direction length of the electrode active material layer (120).

10. The manufacturing method for an electrode of claim 9, wherein non-coated parts (140) are formed on the exterior of the resistance layer (130) based on the width direction of the current collector (110) and the electrode tab (111) is formed at one of the non-coated parts (140).

11. The manufacturing for an electrode method of claim 1, wherein the slot die (200;300) has a structure in which a first block (210;310), a second block (220;320), and a third block (230;330) are consecutively fastened,
a first discharge port (251;351) is formed at an interface between the first block (210;310) and the second block (220;320) through which the electrode slurry (121) is discharged, and
a second discharge port (252;352) is formed at an interface between the second block (220;320) and the third block (230; 330) through which the resistance layer (130) composition is discharged.

12. An electrode having a structure in which:
an electrode active material layer (130) is formed on a current collector (110) in which electrode tabs (111) are formed at one end, and
resistance layers (130) are formed at opposite ends of the electrode active material layer (120), and
the resistance layers (130) include inorganic additives and binder;
wherein the resistance layer (130) composition includes 60 to 90wt% of inorganic additives and 10 to 40wt% of binder.

## Patentansprüche

1. Herstellungsverfahren für eine Elektrode, umfassend:
einen Schritt (S10) des Bildens einer Elektrodenaktivmaterialschicht (120) und einer Widerstandsschicht (130) durch Applizieren einer Widerstandsschichtzusammensetzung (131), umfassend anorganische Additive, und eine Elektrodenaufschlämmung (121), umfassend ein Elektrodenaktivmaterial, auf einem Stromkollektor (110);
einen Schritt (S20) des Trocknens des Stromkollektors (110), in welchem die Elektrodenaktivmaterialschicht (120) und die Widerstandsschicht (130) gebildet werden; und
einen Schritt (S30) des Bildens der Elektrode, in welcher eine Elektrodenlasche (111) an einem Ende durch Einkerben des getrockneten Stromkollektors (110) gebildet wird, und
der Schritt (S10) des Bildens der Elektrodenaktivmaterialschicht (120) und der Widerstandsschicht (130) durch eine Schlitzdüse (200; 300) durchgeführt wird, in welcher zwei Auslassöffnungen (250) gebildet werden, welche durch zwei Säulen gebildet sind, welche benachbart zu gegenüberliegenden Enden der Elektrodenaktivmaterialschicht (120) basierend auf der Breitenrichtung des Stromkollektors (110) gebildet werden; und
wobei die Widerstandsschichtzusammensetzung (131) 60 bis 90 Gew.-% anorganische Additive und 10 bis 40 Gew.-% Bindemittel umfasst.

2. Herstellungsverfahren für eine Elektrode nach Anspruch 1, wobei die Dicke der Widerstandsschicht (130) dieselbe ist wie die Dicke der Elektrodenaktivmaterialschicht (120).

3. Herstellungsverfahren für eine Elektrode nach Anspruch 1, wobei die Breitenrichtungslänge von einer der Widerstandsschichten (130), welche benachbart zu gegenüberliegenden Enden der Elektrodenaktivmaterialschicht (120) ausgebildet ist, kürzer ist als die Breitenrichtungslänge einer anderen.

4. Herstellungsverfahren für eine Elektrode nach Anspruch 3, wobei die Breitenrichtungslänge der Widerstandsschicht (130) mit der kürzeren Breitenrichtungslänge unter den Widerstandsschichten (130) 1 bis 20 % der Breitenrichtungslänge der Elektrodenaktivmaterialschicht (120) beträgt.

5. Herstellungsverfahren für eine Elektrode nach Anspruch 4, wobei unbeschichtete Teile (140) auf dem Äußeren der Widerstandsschicht (130) basierend auf der Breitenrichtung des Stromkollektors (110) gebildet werden, und die Elektrodenlasche (111) an einem der unbeschichteten Teile (140) gebildet wird.

6. Herstellungsverfahren für eine Elektrode nach Anspruch 5, wobei die Elektrodenlasche (111) an dem unbeschichteten Teil (140) benachbart zu der Widerstandsschicht (130) mit kürzerer Breitenrichtungslänge unter den Widerstandsschichten (130) gebildet wird.

7. Herstellungsverfahren für eine Elektrode nach Anspruch 3, wobei im Schritt des Bildens der Elektrode der Stromkollektor (111) so eingekerbt wird, dass die Widerstandsschicht (130) mit längerer Breitenrichtungslänge unter den Widerstandsschichten (130) die gleiche Breitenrichtungslänge wie eine andere aufweist.

8. Herstellungsverfahren für eine Elektrode nach Anspruch 1, wobei die Breitenrichtungslänge von einer der Widerstandsschichten (130), welche benachbart zu den gegenüberliegenden Enden der Elektrodenaktivmaterialschicht (120) ausgebildet ist, die gleiche ist wie die Breitenrichtungslänge einer anderen.

9. Herstellungsverfahren für eine Elektrode nach Anspruch 8, wobei die Breitenrichtungslänge von einer der Widerstandsschichten (130) 1 bis 20 % der Breitenrichtungslänge der Elektrodenaktivmaterialschicht (120) beträgt.

10. Herstellungsverfahren für eine Elektrode nach Anspruch 9, wobei unbeschichtete Teile (140) auf dem Äußeren der Widerstandsschicht (130) basierend auf der Breitenrichtung des Stromkollektors (110) gebildet werden und die Elektrodenlasche (111) an einem der unbeschichteten Teile (140) gebildet wird.

11. Herstellungsverfahren für eine Elektrode nach Anspruch 1, wobei die Schlitzdüse (200;300) eine Struktur aufweist, in welcher ein erster Block (210;310), ein zweiter Block (220;320) und ein dritter Block (230;330) aufeinanderfolgend befestigt sind,
eine erste Auslassöffnung (251;351) an einer Schnittstelle zwischen dem ersten Block (210;310) und dem zweiten Block (220;320) gebildet wird, durch welche die Elektrodenaufschlämmung (121) ausgelassen wird, und
eine zweite Auslassöffnung (252;352) an einer Schnittstelle zwischen dem zweiten Block (220;320) und dem dritten Block (230;330) gebildet wird, durch welche die Widerstandsschichtzusammensetzung (131) ausgelassen wird.

12. Elektrode, welche eine Struktur aufweist, in welcher:
eine Elektrodenaktivmaterialschicht (120) auf einem Stromkollektor (110) gebildet wird, in welchem Elektrodenlaschen (111) an einem Ende gebildet werden, und
Widerstandsschichten (130) an gegenüberliegenden Enden der Elektrodenaktivmaterialschicht (120) gebildet werden, und
die Widerstandsschichten (130) anorganische Additive und Bindemittel umfassen;
wobei die Widerstandsschichtzusammensetzung (131) 60 bis 90 Gew.-% an anorganischen Additiven und 10 bis 40 Gew.-% an Bindemittel umfasst.

## Revendications

1. Procédé de fabrication d'une électrode comprenant :
une étape (S10) de formation d'une couche de matériau actif d' électrode (120) et d'une couche de résistance (130), par l'application d'une composition de couche de résistance (131) comportant des additifs inorganiques et une suspension d'électrode (121), comportant un matériau actif d'électrode sur un collecteur de courant (110) ;
une étape (S20) de séchage du collecteur de courant (110) dans lequel la couche de matériau actif d'électrode (120) et la couche de résistance (130) sont formées ; et
une étape (S30) de formation de l'électrode dans laquelle une patte d'électrode (111) est formée à une extrémité par l'entaillage du collecteur de courant (110) séché, et
l'étape (S10) de formation de la couche de matériau actif d'électrode (120) et de la couche de résistance (130) est réalisée par une filière fendue (200 ; 300) dans laquelle deux orifices de refoulement (250), formés par deux colonnes adjacentes à des extrémités opposées de la couche de matériau actif d'électrode (120) sur la base de la direction de la largeur du collecteur de courant (110), sont formés ; et
dans lequel la composition de couche de résistance (131) comporte 60 à 90 % en poids d'additifs inorganiques et 10 à 40 % en poids de liant.

2. Procédé de fabrication d'une électrode selon la revendication 1, dans lequel l'épaisseur de la couche de résistance (130) est la même que l'épaisseur de la couche de matériau actif d'électrode (130).

3. Procédé de fabrication d'une électrode selon la revendication 1, dans lequel la longueur dans la direction de la largeur de l'une des couches de résistance (130) formées de manière adjacente à des extrémités opposées de la couche de matériau actif d'électrode (120) est plus courte que la longueur dans la direction de la largeur d'une autre.

4. Procédé de fabrication d'une électrode selon la revendication 3, dans lequel la longueur dans la direction de la largeur de la couche de résistance (130) ayant la longueur dans la direction de la largeur plus courte parmi les couches de résistance (130) est de 1 à 20 % de la longueur dans la direction de la largeur de la couche de matériau actif d'électrode (130).

5. Procédé de fabrication d'une électrode selon la revendication 4, dans lequel des parties non revêtues (140) sont formées sur l'extérieur de la couche de résistance (130) sur la base de la direction de la largeur du collecteur de courant (110), et la patte d'électrode (111) est formée au niveau de l'une des parties non revêtues (140).

6. Procédé de fabrication d'une électrode selon la revendication 5, dans lequel la patte d'électrode (111) est formée au niveau de la partie non revêtue (140) adjacente à la couche de résistance (130) ayant une longueur dans la direction de la largeur plus courte parmi les couches de résistance (130).

7. Procédé de fabrication d'une électrode selon la revendication 3, dans lequel à l'étape de formation de l'électrode, le collecteur de courant (111) est entaillé d'une manière telle que la couche de résistance (130) ayant une longueur dans la direction de la largeur plus longue parmi les couches de résistance (130) possède la même longueur dans la direction de la largeur qu'une autre.

8. Procédé de fabrication d'une électrode selon la revendication 1, dans lequel la longueur dans la direction de la largeur de l'une des couches de résistance (130) formées de manière adjacente à des extrémités opposées de la couche de matériau actif d'électrode (120) est la même que la longueur dans la direction de la largeur d'une autre.

9. Procédé de fabrication d'une électrode selon la revendication 8, dans lequel la longueur dans la direction de la largeur de l'une des couches de résistance (130) est de 1 à 20 % de la longueur dans la direction de la largeur de la couche de matériau actif d'électrode (120).

10. Procédé de fabrication d'une électrode selon la revendication 9, dans lequel des parties non revêtues (140) sont formées sur l'extérieur de la couche de résistance (130) sur la base de la direction de la largeur du collecteur de courant (110), et la patte d'électrode (111) est formée au niveau de l'une des parties non revêtues (140).

11. Procédé de fabrication d'une électrode selon la revendication 1, dans lequel la filière fendue (200 ; 300) possède une structure dans laquelle un premier bloc (210 ; 310), un deuxième bloc (220; 320), et un troisième bloc (230; 330) sont successivement fixés,
un premier orifice de refoulement (251 ; 351) est formé au niveau d'une interface entre le premier bloc (210 ; 310) et le deuxième bloc (220 ; 320), à travers lequel la suspension d'électrode (121) est refoulée, et
un deuxième orifice de refoulement (252 ; 352) est formé au niveau d'une interface entre le deuxième bloc (220 ; 320) et le troisième bloc (230 ; 330), à travers lequel la composition de couche de résistance (130) est refoulée.

12. Électrode ayant une structure dans laquelle :
une couche de matériau actif d'électrode (130) est formée sur un collecteur de courant (110) dans laquelle des pattes d'électrode (111) sont formées à une extrémité, et
des couches de résistance (130) sont formées à des extrémités opposées de la couche de matériau actif d'électrode (120), et
les couches de résistance (130) comportent des additifs inorganiques et un liant ;
dans laquelle la composition de couche de résistance (130) comporte 60 à 90 % en poids d'additifs inorganiques et 10 à 40 % en poids de liant.
